# EUROPEAN PATENT APPLICATION

(11) **EP 4 270 161 A1**
(43) Date of publication of application: **01.11.2023**
(21) Application number: 22739618.1
(22) Date of filing: 11.01.2022
(51) Int. Cl.: G06F 3/0354, G06F 3/038, G06F 3/0484, G06F 3/04883, G06F 40/166, G06V 30/226

(54) **ELECTRONIC APPARATUS AND METHOD FOR PROCESSING INPUT FROM STYLUS PEN IN ELECTRONIC APPARATUS**

(30) Priority: 13.01.2021 KR 20210004407
(71) Applicant: Samsung Electronics Co., Ltd., Suwon-si, Gyeonggi-do 16677 (KR)
(72) Inventor: PARK, Chunbae, Suwon-si, Gyeonggi-do 16677 (KR); KIM, Sangheon, Suwon-si, Gyeonggi-do 16677 (KR); KIM, Hongmo, Suwon-si, Gyeonggi-do 16677 (KR); JEON, Dami, Suwon-si, Gyeonggi-do 16677 (KR); JEGAL, Eun, Suwon-si, Gyeonggi-do 16677 (KR); JEONG, Changjin, Suwon-si, Gyeonggi-do 16677 (KR); LIM, Yeunwook, Suwon-si, Gyeonggi-do 16677 (KR)
(74) Representative: Gulde & Partner
(86) International application number: PCT/KR2022/000425
(87) International publication number: WO 2022/154423

(57) **Abstract**

An electronic apparatus according to various embodiments comprises: a display; and a processor, wherein the processor may be set to: when an input of handwriting data using a stylus pen is detected in a second input area including a first input area, in a first state of waiting for an input of handwriting data, convert the input handwriting data to text data; switch to a second state of displaying the converted text data as preview data in the first input area while the input handwriting data is displayed in the second input area; and when the end of an input of the handwriting data is detected, determine the text data displayed as the preview data as input data and switch to a third state of displaying the converted text data in the first input area. Various other embodiments can be provided.

## Description

### [Technical Field]

Various embodiments relate to an electronic apparatus and a method for processing an input from a stylus pen in an electronic apparatus.

### [Background Art]

An electronic apparatus is being developed to be able to receive various inputs from a user via a specified input device (e.g., a stylus pen) connected to the electronic apparatus through wireless communication. The electronic apparatus may identify a position on the electronic apparatus designated by an input device having a pen function (which may be referred to as a "stylus pen" hereinafter for convenience of description), and may perform a corresponding function.

The stylus pen may include wireless communication, and may provide various functions, such as pressure information about the stylus pen, battery state information, or event information according to a button input, through a display of the electronic apparatus linked with the stylus pen.

When an application including an input area for displaying a text input through a keypad is executed, the electronic apparatus may separately provide a handwriting area for displaying handwriting data via the stylus pen through the application.

In addition, when the application including the input area for displaying text input through the keypad is executed, the electronic apparatus may provide a copy and paste function as data stored in a clipboard is displayed by selection of a menu present on the keypad.

### [Detailed Description of the Invention]

### [Technical Problem]

When an application including an input area for displaying a text input through a keypad is executed, an electronic apparatus may provide a handwriting area for displaying handwriting data via the stylus pen by additional selection of a user. When handwriting data is input in the handwriting area, the electronic apparatus converts the input handwriting data into text data and displays the text data in the input area, making it difficult to intuitively recognize the text data.

Further, the electronic apparatus is able to provide data stored in a clipboard only in the electronic device, and is not able to share the data stored in the clipboard with an external electronic apparatus.

### [Technical Solution]

According to various embodiments, an electronic apparatus may include a display and a processor, wherein the processor may be configured to convert handwriting data being input into text data when input of the handwriting data with a stylus pen is detected in a second input area including a first input area in a first state of waiting for input of handwriting data and switch to a second state in which the converted text data is displayed as preview data in the first input area while displaying the handwriting data being input in the second input area, and to determine the text data displayed as the preview data as input data and switch to a third state in which the converted text data is displayed in the first input area when termination of the input of the handwriting data is detected.

According to various embodiments, a method for processing an input from a stylus pen in an electronic apparatus may include converting handwriting data being input into text data when input of the handwriting data with a stylus pen is detected in a second input area including a first input area in a first state of waiting for input of handwriting data, switching to a second state in which the converted text data is displayed as preview data in the first input area while displaying the handwriting data being input in the second input area, and determining the text data displayed as the preview data as input data and switching to a third state in which the converted text data is displayed in the first input area when termination of the input of the handwriting data is detected.

### [Advantageous Effects]

According to various embodiments, handwriting data corresponding to an input from a stylus pen may be displayed in an extended input area including an input area, and the handwriting data may be converted to be displayed as text data in the extended input area when the input from the stylus pen is terminated, thereby providing convenience for a user. Further, while displaying the handwriting data by the input from the stylus pen in the extended input area, the handwriting data may be converted into text data to be displayed as preview data, thereby preventing incorrect input of the handwriting data.

According to various embodiments, an electronic apparatus may share data stored in a clipboard with an external electronic apparatus, thereby providing convenience of being able to continuously use the data.

### [Brief Description of Drawings]

FIG. 1 is a block diagram of an electronic apparatus in a network environment according to various embodiments;
FIG. 2 is a perspective view of an electronic apparatus including a stylus pen according to various embodiments;
FIG. 3 is a block diagram illustrating a stylus pen according to various embodiments;
FIG. 4 is a block diagram illustrating an electronic apparatus according to various embodiments;
FIG. 5 is a diagram illustrating a software module configuration of an electronic apparatus according to various embodiments;
FIG. 6 is a diagram illustrating a first input area included in a first application in an electronic apparatus according to various embodiments;
FIG. 7 is a diagram illustrating a state switch operation according to input of handwriting data in an electronic apparatus according to various embodiments;
FIG. 8 is a diagram illustrating a switch to a first state in which an electronic apparatus may wait for input of handwriting data according to various embodiments;
FIG. 9 is a diagram illustrating an operation of inputting handwriting data in a second state of an electronic apparatus according to various embodiments;
FIG. 10 is a diagram illustrating an operation of inputting handwriting data in a second state of an electronic apparatus according to various embodiments
FIG. 11 is a diagram illustrating use of recommended data in a second state of an electronic apparatus according to various embodiments;
FIG. 12 is a diagram illustrating an operation of editing input data in a third state of an electronic apparatus according to various embodiments;
FIG. 13 is a diagram illustrating an operation of editing input data in a third state of an electronic apparatus according to various embodiments;
FIG. 14A to FIG. 14C are diagrams illustrating processing of handwriting data input through a stylus pen in an electronic apparatus according to various embodiments;
FIG. 15A and FIG. 15B are diagrams illustrating processing of emoji data input through a stylus pen in an electronic apparatus according to various embodiments;
FIG. 16A and FIG. 16B are diagrams illustrating an operation of sharing data in a clipboard in an electronic apparatus according to various embodiments;
FIG. 17 is a flowchart illustrating an operation of processing an input from a stylus pen in an electronic apparatus according to various embodiments; and
FIG. 18 is a flowchart illustrating an operation of sharing data in a clipboard in an electronic apparatus according to various embodiments.

### [Mode for Carrying out the Invention]

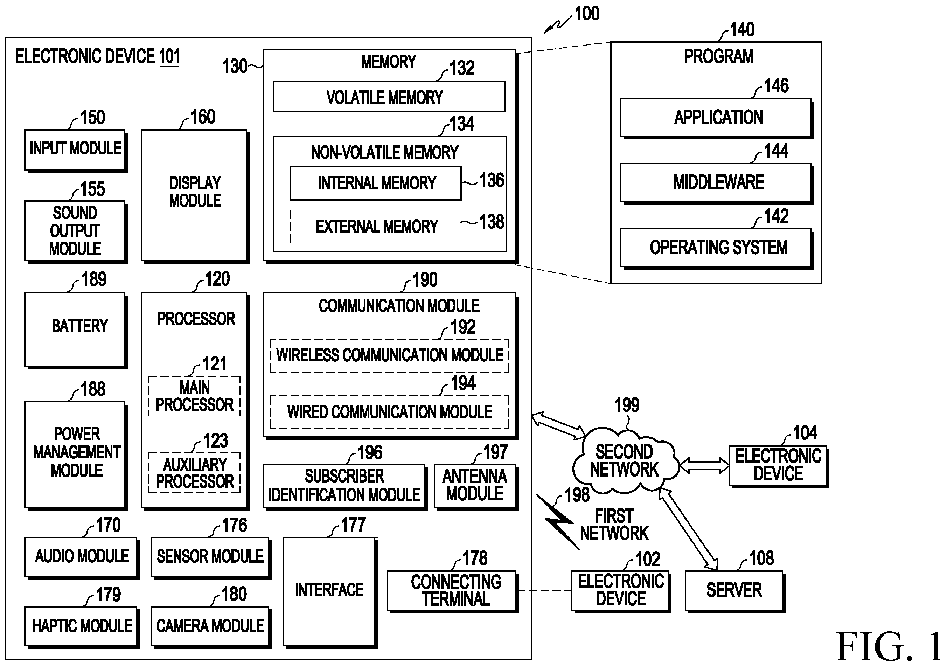

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

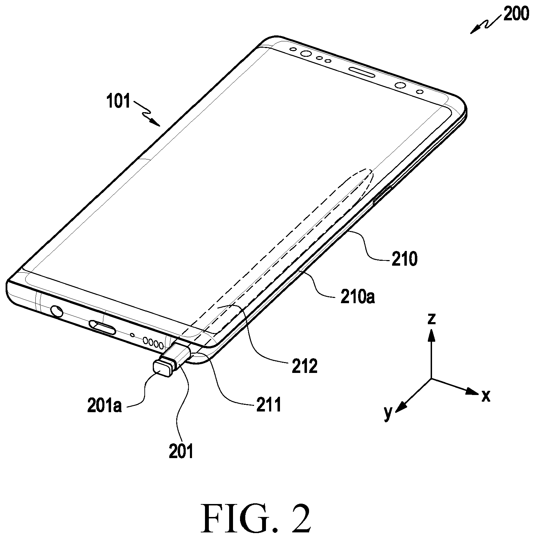

FIG. 2 is a perspective view 200 of an electronic apparatus 101 including a stylus pen 201 (e.g., the electronic apparatus 102 of FIG. 1) according to various embodiments. According to an embodiment, the stylus pen 201 may correspond to the input module 150 of FIG. 1 instead of the electronic apparatus 102 of FIG. 1.

Referring to FIG. 2, according to various embodiments, the electronic apparatus 101 may include a configuration illustrated in FIG. 1, and may include a structure in which the stylus pen 201 is insertable. The electronic apparatus 101 may include a housing 210, and a portion of the housing 210, for example, a portion of a lateral side 210a, may include a hole 211. The electronic apparatus 101 may include a first internal space 212, which is a storage space connected with the hole 211, and the stylus pen 201 may be inserted into the first internal space 212. According to the illustrated embodiment, the stylus pen 201 may include a first button 201a which is pressable at one end in order to easily take the stylus pen 201 out of the first internal space 212 of the electronic apparatus 101. When the first button 201a is pressed, a repulsion mechanism (e.g., a repulsion mechanism by at least one elastic member (e.g., a spring)) configured in association with the first button 201a may operate, thereby releasing the stylus pen 201 may be released from the first internal space 212.

According to various embodiments, the electronic apparatus 101 may include a structure capable of attaching the stylus pen 201 to the electronic apparatus 101. For example, the electronic apparatus 101 may include at least one magnetic body at a position adjacent to an attachment area so that the stylus pen 201 may be attached to the outside of the housing 210. The stylus pen 201 may be attached to the outside of the housing 210 of the electronic apparatus 101 through the at least one magnetic body.

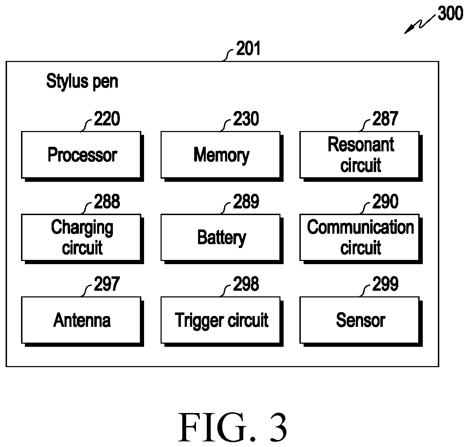

FIG. 3 is a block diagram 300 illustrating a stylus pen (e.g., the stylus pen 201 of FIG. 2) according to various embodiments.

Referring to FIG. 3, according to various embodiments, the stylus pen 201 may include a processor 220, a memory 230, a resonant circuit 287, a charging circuit 288, a battery 289, a communication circuit 290, an antenna 297, a trigger circuit 298, and/or a sensor 299. In some embodiments, the processor 220, at least part of the resonant circuit 287, and/or at least part of the communication circuit 290 of the stylus pen 201 may be configured on a printed circuit board or in the form of a chip. The processor 220, the resonant circuit 287, and/or the communication circuit 290 may be electrically connected to the memory 230, the charging circuit 288, the battery 289, the antenna 297, the trigger circuit 298, and/or the sensor 299.

According to various embodiments, the processor 220 may include a generic processor configured to execute a customized hardware module or software (e.g., an application program). The processor 220 may include a hardware component (function) or a software component (program) including at least one of various sensors included in the stylus pen 201, a data measurement module, an input/output interface, a module managing a state or an environment of the stylus pen 201, or a communication module. The processor 220 may include, for example, one or a combination of two or more of hardware, software, or firmware. According to an embodiment, the processor 220 may be configured to transmit information indicating a pressed state of a button (e.g., a button 337), sensing information obtained by the sensor 299, and/or information (e.g., information associated with the position of the stylus pen 201) calculated based on the sensing information to the electronic apparatus 101 through the communication circuit 290.

According to various embodiments, the resonant circuit 287 may resonate based on an electromagnetic signal generated from a digitizer (e.g., the display module 160) of the electronic apparatus 101, and may radiate an electromagnetic resonance (EMR) input signal (or magnetic field and) by resonance. The electronic apparatus 101 may identify a position of the stylus pen 201 on the electronic apparatus 101 by using the EMR input signal. For example, the electronic apparatus 101 may identify the position of the stylus pen 201, based on a magnitude of an induced electromotive force (e.g., an output current) generated by the EMR input signal, in each of a plurality of channels (e.g., a plurality of loop coils) in the digitizer. Although the electronic apparatus 101 and the stylus pen 201 have been described above as operating based on an EMR method, which is merely for illustration, the electronic apparatus 101 may generate a signal based on an electric field, based on an electrically coupled resonance (ECR) method. The resonant circuit of the stylus pen 201 may resonate by an electric field. The electronic apparatus 101 may identify a potential in a plurality of channels (e.g., electrodes) by resonance in the stylus pen 201, and may also identify the position of the stylus pen 201, based on the potential. The stylus pen 201 may also be configured by an active electrostatic (AES) method, and those skilled in the art will understand that a type in which the stylus pen 201 is configured is not limited. The electronic apparatus 101 may also detect the stylus pen 201, based on a change in capacitance (self capacitance or mutual capacitance) associated with at least one electrode of a touch panel. In this case, the stylus pen 201 may not include a resonant circuit. In the disclosure, "panel" or "sensing panel" may be used as a term encompassing a digitizer and a touch screen panel (TSP).

According to various embodiments, the memory 230 may store information related to an operation of the stylus pen 201. For example, the information may include information for communication with the electronic apparatus 101 and frequency information related to an input operation of the stylus pen 201. In addition, the memory 230 may store a program (or an application, an algorithm, or a processing loop) for calculating information about the position of the stylus pen 201 (e.g., coordinate information and/or displacement information) from sensing data of the sensor 299. The memory 230 may store a communication stack of the communication circuit 290. The communication circuit 290 and/or the processor 220 may include a dedicated memory depending on a configuration.

According to various embodiments, the resonant circuit 287 may include a coil (or inductor) and/or a capacitor. The resonant circuit 287 may resonate based on an input electric field and/or magnetic field (e.g., an electric field and/or magnetic field generated from the digitizer of the electronic apparatus 101). When the stylus pen 201 transmits a signal by using the EMR method, the stylus pen 201 may generate a signal including a resonant frequency, based on an electromagnetic field generated from an inductive panel of the electronic apparatus 101. When the stylus pen 201 transmits a signal by using the AES method, the stylus pen 201 may generate a signal using capacitive coupling with the electronic apparatus 101. When the stylus pen 201 transmits a signal by using the ECR method, the stylus pen 201 may generate a signal including a resonant frequency, based on an electric field generated from a capacitive device of the electronic apparatus. According to an embodiment, the resonant circuit 287 may be used to change a strength or frequency of an electromagnetic field according to a manipulation state of a user. For example, the resonant circuit 287 may provide various frequencies for recognizing a hovering input, a drawing input, a button input, or an erasing input. For example, the resonant circuit 287 may provide various frequencies for recognizing a hovering input, a drawing input, a button input, or an erasing input. For example, the resonant circuit 287 may provide various resonant frequencies according to a connection combination of a plurality of capacitors, or may provide various resonant frequencies, based on a variable inductor and/or a variable capacitor.

According to various embodiments, when connected to the resonant circuit 287, based on a switching circuit, the charging circuit 288 may rectify a resonant signal generated by the resonant circuit 287 into a DC signal, and may provide the DC signal to the battery 289. According to an embodiment, the stylus pen 201 may determine whether the stylus pen 201 is inserted into the electronic apparatus 101 by using a voltage level of a DC signal detected by the charging circuit 288. Alternatively, the stylus pen 201 may determine whether the stylus pen 201 is inserted by identifying a pattern corresponding to a signal identified by the charging circuit 288.

According to various embodiments, the battery 289 may be configured to store power required for an operation of the stylus pen 201. The battery 289 may include, for example, a lithium-ion battery or a capacitor, and may be rechargeable or replaceable. According to an embodiment, the battery 289 may be charged using power (e.g., a DC signal (DC power)) provided from the charging circuit 288.

According to various embodiments, the communication circuit 290 may be configured to perform a wireless communication function between the stylus pen 201 and the communication module 190 of the electronic apparatus 101. According to an embodiment, the communication circuit 290 may transmit state information, input information, and position-related information about the stylus pen 201 to the electronic apparatus 101 by using a short-distance communication method. For example, the communication circuit 290 may transmit direction information (e.g., motion sensor data) about the stylus pen 201 obtained via the trigger circuit 298, voice information input via a microphone, or information about a remaining level of the battery 289 to the electronic apparatus 101. For example, the communication circuit 290 may transmit sensing data obtained from the sensor 299 and/or information related to the position of the stylus pen 201 identified based on the sensing data to the electronic apparatus 101. For example, the communication circuit 290 may transmit information about a state of a button (e.g., a button 337) included in the stylus pen 201 to the electronic apparatus 101. The short-range communication method may include, for example, at least one of Bluetooth, Bluetooth Low Energy (BLE), NFC, and Wi-Fi Direct, but is not limited in type.

According to various embodiments, the antenna 297 may be used to transmit or receive a signal or power to the outside (e.g., the electronic apparatus 101) or from the outside. According to an embodiment, the stylus pen 201 may include a plurality of antennas 297, among which at least one antenna 297 suitable for a communication method may be selected among the plurality of antennas. The communication circuit 290 may exchange a signal or power with an external electronic apparatus through the selected at least one antenna 297.

According to various embodiments, the trigger circuit 298 may include at least one button or sensor circuit. According to an embodiment, the processor 220 may identify an input method (e.g., touching or pressing) or type (e.g., an EMR button or BLE button) of the button of the stylus pen 201. According to an embodiment, the trigger circuit 298 may transmit a trigger signal to the electronic apparatus 101 by using an input signal of the button or a signal through the sensor 299.

According to various embodiments, the sensor 299 may include an accelerometer, a gyro sensor, and/or a geomagnetic sensor. The accelerometer may sense information about a linear movement of the stylus pen 201 and/or a 3-axis, 6-axis, or/and 9-axis acceleration of the stylus pen 201. The gyro sensor may sense information related to rotation of the stylus pen 201. The geomagnetic sensor may sense information about a direction of the stylus pen 201 in an absolute coordinate system. According to an embodiment, the sensor 299 may include not only a sensor for measuring a movement but also a sensor capable of generating an electrical signal or a data value corresponding to an internal operating state of the stylus pen 201 or an external environmental state, for example, at least one of a battery level sensor, a pressure sensor, an optical sensor, a temperature sensor, and a biometric sensor. According to various embodiments, the processor 220 may transmit information obtained from the sensor 299 to the electronic apparatus 101 through the communication circuit 290. Alternatively, the processor 220 may transmit the information about the position of the stylus pen 201 (e.g., a coordinate and/or displacement of the stylus pen 201) to the electronic apparatus 101 through the communication circuit 290, based on the information obtained from the sensor 299.

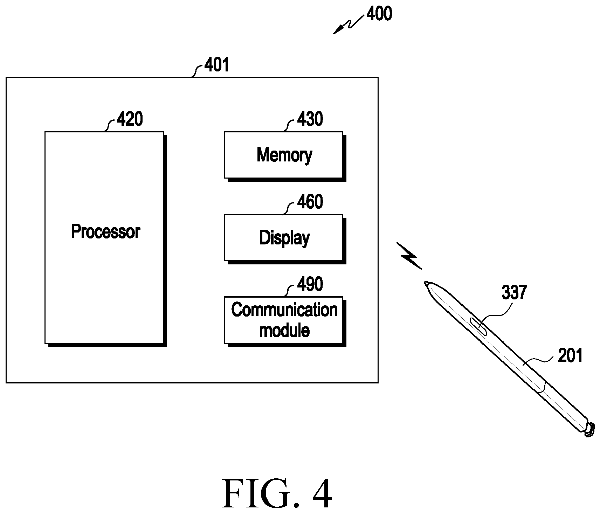

FIG. 4 is a block diagram 400 illustrating an electronic apparatus according to various embodiments.

Referring to FIG. 4, the electronic apparatus 401 (e.g., the electronic apparatus 101 of FIG. 1) may include a processor 420, a memory 430, a display 460, and a communication module 490.

According to various embodiments, the processor 420 may control an overall operation of the electronic apparatus 401, and may be the same as the processor 120 of FIG. 1, or may perform at least one function or operation performed by the processor 120.

According to various embodiments, when receiving a first event from a stylus pen 201 (e.g., the stylus pen 201 of FIG. 2 and FIG. 3), the processor 420 may switch to a first state of waiting for input of handwriting data via the stylus pen 201.

According to an embodiment, when executing a first application including a first input area and detecting detachment of the stylus pen 201 inserted into the electronic apparatus 401, the processor 420 may configure a second input area for switching to the first state of waiting for the input of the handwriting data. The processor 420 may configure an input area obtained by extending the first input area by a certain area (e.g., a certain pixel) as the second input area.

According to an embodiment, when receiving the first event indicating a hovering input or a touch input from the stylus pen 201 in the second input area, the processor 420 may switch to the first state in which the second input area for inputting handwriting data with the stylus pen 201 is displayed. In the first state, the second input area may be selectively displayed. For example, the first application including the first input area may include a gallery application, a search application, a message application, and/or an Internet application. For example, the first input area may include an edit field area, a text input field area, a tool bar, and/or an input field area in HTML of the Internet.

According to various embodiments, when receiving a second event indicating input of handwriting data with the stylus pen 201 (e.g., the stylus pen 201 of FIG. 2 and FIG. 3) in the second input area in the first state, the processor 420 may switch to a second state in which the handwriting data and preview data obtained by converting the handwriting data into text data are displayed.

According to an embodiment, when detecting the input of the handwriting data with the stylus pen 201 in the second input area, the processor 420 may convert the handwriting data being input into the text data, and may switch to the second state in which the converted text data is displayed as the preview data in the first input area while displaying the handwriting data being input in the second input area.

According to an embodiment, in the second state, the processor 420 may determine the type of a letter included in the handwriting data, based on trajectory information about a touch event received from the stylus pen 201, and may display the handwriting data in the second input area.

According to an embodiment, in the second state, when detecting the input of the handwriting data with the stylus pen 201 in the second input area, the processor 420 may convert the handwriting data being input in letters into the text data, and may display the converted text data as the preview data in the first input area.

According to an embodiment, the text data displayed as the preview data in the second state is provided as a preview for the user in order to prevent erroneous input of the handwriting data input from the stylus pen 201, and may refer to text data before being confirmed as input data.

According to an embodiment, in the second state, the processor 420 may detect the input of the handwriting data through the stylus pen 201 in all areas of the display 460 in which an input from the stylus pen 201 is detectable including the second input area.

According to an embodiment, when the handwriting data is out of the second input area while detecting the input of the handwriting data with the stylus pen 201 in the second input area in the second state, the processor 420 may recognize the handwriting data which is out of the second input area as handwriting data in the second input area.

According to an embodiment, in the second state, the processor 420 may provide a toolbar including functions available via the stylus pen 201 at a position adjacent to the second input area. When detecting a drag gesture through the stylus pen 201, the processor 420 may move the position of the toolbar to correspond to the drag gesture. When the toolbar disappears and is then regenerated and displayed, the processor 420 may display the toolbar at a position configured as an initial position or the position where the toolbar is displayed before disappearing. The toolbar displayed at the adj acent position not overlapping the second input area may basically include, for example, a space function, a backspace function, and/or a keypad switch function, and the processor 420 may add a required function according to the first input area included in the first application. For example, a first input area indicating an email field included in an email application may include an input key for inputting text indicating an email domain address, for example ".com", as an additional function. For example, when there is no input data in a first input area indicating a URL field included in an Internet application, an input key for inputting "www." may be included as an additional function. For example, when there is input data in the first input area indicating the URL field included in the Internet application, an input key for inputting text indicating an Internet top-level domain, for example, ".com", may be included as an additional function. For example, a first input area indicating a text input field included in a message application may include an input key for inputting or adding an object other than text, for example, an input key for inputting an emoticon, as an additional function.

According to an embodiment, in the second state, the processor 420 may identify recommended text data, based on the handwriting data being input through the stylus pen 201 in the second input area, and may display the recommended text data at a position adjacent to the handwriting data displayed in the second input area. The processor 420 may determine a letter to be input next, based on the handwriting data being input in the second input area, and may display the determined letter as recommended text data. The processor 420 may determine the letter to be input next, based on at least one of a probability value of a letter already input in the handwriting data, a context already input in the handwriting data, or a situation in which the handwriting data is input (e.g., the type of the first application being executed or the type of the first input area (e.g., a number field or an HTML field)), and may display the determined letter as recommended text data.

According to an embodiment, when receiving an event corresponding to a different function (e.g., a scroll function or a screen zoom function) from the input of the handwriting data from the stylus pen 201 in the first state or the second state, the processor 420 may terminate the first state or the second state, and may control the different function to be performed.

According to various embodiments, when receiving a third event from the stylus pen 201 (e.g., the stylus pen 201 of FIG. 2 and FIG. 3) or a different object in the second state, the processor 420 may switch to a third state in which the input of the handwriting data through the stylus pen 201 is terminated.

According to an embodiment, when receiving a third event of receiving no input signal from the stylus pen 201 for a certain time, receiving a third event indicating a touch input from the stylus pen 201 in an area other than the second input area within a certain time after the input of the handwriting data in the second input area is canceled, or receiving a third event indicating a touch input from a first object (e.g., a hand) in the second input area in the second state, the processor 420 may detect termination of the input of the handwriting data, and may switch to the third state.

According to an embodiment, when detecting the termination of the input of the handwriting data in the second state and switching to the third state, the processor 420 may determine, as input data, the text data displayed as the preview data in the second state, and may display the text data in the first input area.

According to an embodiment, when displaying, as the input data, the text data displayed as the preview data in the first input area in the third state, the processor 420 may delete the handwriting data displayed in the second input area.

According to an embodiment, when displaying, as the input data, the text data displayed as the preview data in the first input area in the third state, the processor 420 may cancel the display of the second input area.

According to an embodiment, when detecting a selection gesture for the recommended text data using the stylus pen 201 while displaying the recommended text data, based on the handwriting data being input through the stylus pen 201 in the second input area in the second state, the processor 420 may determine the recommended data as input data, may switch to the third state, and may display the recommended data as the input data in the first input area.

According to an embodiment, when detecting an editing gesture for the text data displayed in the first input area using the stylus pen 201 in the third state, the processor 420 may perform an editing function for the text data, based on the type of the detected editing gesture.

For example, when detecting a correction gesture using the stylus pen 201 which is superimposing a new second letter as handwriting data on a first letter among letters included in the text data displayed in the first input area, the processor 420 may convert the second letter input as the handwriting data into text data, may delete the first letter, and may display the second letter converted into the text data at the position of the deleted first letter.

For example, when detecting a deletion gesture using the stylus pen 201 which drawing a line a plurality of times on the first letter among the letters included in the text data displayed in the first input area, the processor 420 may delete the first letter.

For example, when detecting a space insertion gesture using the stylus pen 201 which is inputting a "V" shape, an arrow shape indicating a downward direction, or a shape of drawing a line in the downward direction between the first letter and a third letter among the letters included in the text data displayed in the first input area, the processor 420 may insert a space between the first letter and the third letter.

For example, when detecting an additional gesture using the stylus pen 201 which is inputting a "V" shape between the first letter and the third letter among the letters included in the text data displayed in the first input area and inputting the second letter as handwriting data in the "V" shape, the processor 420 may convert the second letter input as the handwriting data into text data, and may add and display the second letter converted into the text data between the first letter and the third letter.

According to an embodiment, when detecting a selection gesture of selecting some letters among the letters included in the text data displayed in the first input area by drawing a line thereon using the stylus pen 201 with a button 337 provided on the stylus pen 201 input and then canceling the touch input in the third state, the processor 420 may provide a text selection function of providing a relevant option menu (e.g., Copy, Cut, or Select All) for some selected letters.

According to various embodiments, when detecting the handwriting data input using the stylus pen 201 in the first input area as emoji data in the second state, the processor 420 may detect first emoji data corresponding to emoji data drawn by the handwriting data among a plurality of pieces of emoji data stored in the electronic apparatus 401, and may display the first emoji data in the first input area.

According to an embodiment, while displaying the first emoji data in the first input area, the processor 420 may display an input window including a plurality of pieces of emoji data, and may display emoji data selected from the input window in the first input area instead of the first emoji data, or may additionally display the selected emoji data in the first input area displaying the first emoji data.

According to various embodiments, the processor 420 may share data stored in a clipboard of the electronic apparatus 401 with a first external electronic apparatus.

According to an embodiment, the processor 420 may store a plurality of pieces of clip data in an area of the memory 430 corresponding to the clipboard.

For example, the plurality of pieces of clip data stored in the clipboard may include text data copied from the Internet, image data copied from the Internet, text data copied from a message, or image data shared from an SNS.

For example, a storage type of the first clip data may include text data, a URI, intent, HTML, or image data. The text data is a most general format, and may store long text data without any particular restriction on length. The uniform resource identifier (URI) stores a URI indicating the location of data in the clipboard, and may store only a URI to refer to the location of data, but the actual data may be received from a content provider (CP) after obtaining the URI. The intent stores data related to a command to execute an application, and may be used for a shortcut to an activity or a service.

According to an embodiment, the processor 420 may determine the first external electronic apparatus which logs in with the same user account as a user account of the electronic apparatus 401 among at least one external electronic apparatus detected based on a first communication module (e.g., a BLE communication module) included in the communication module 490, and may transmit at least one first clip data selected for sharing among the plurality of pieces of clip data stored in the clip board to the first external electronic apparatus.

When the first clip data has a data size less than or equal to a predetermined value, the processor 420 may transmit the first clip data (e.g., text data) including raw data to the first external electronic apparatus through the first communication module, based on a first transmission method (e.g., a real-time transfer method).

When the first clip data has a data size equal to or greater than the predetermined value, the processor 420 may transmit the first clip data (e.g., image data) including only metadata without the raw data to the first external electronic apparatus through the first communication module, based on a second transmission method (e.g., a delayed transfer method). Since original address information about the first clip data is included in the metadata of the first clip data, the processor 420 may change the original address information to address information in which the raw data of the first clip data is stored in the electronic apparatus 401, and may transmit the first clip data including only the changed metadata to the first external electronic apparatus.

According to an embodiment, when receiving a request for the raw data of the first clip data (e.g., the image data) from the first external electronic apparatus, the processor 420 may transmit the raw data of the first clip data to the first external electronic apparatus through a second communication module (e.g., a Wi-Fi communication module) included in the communication module 490.

The first external electronic apparatus may provide a copy and paste function using the first clip data received from the electronic apparatus 401 for a user of the first external electronic apparatus as displaying the first clip data received from the electronic apparatus 401 when displaying data stored in the clipboard through selection of a menu present on a keypad of the first external electronic apparatus. The first external electronic apparatus may display, as a thumbnail image, the first clip data (e.g., the image data) including only the metadata without the raw data among the at least one first clip data received from the electronic apparatus 401 when displaying the data stored in the clip board. The thumbnail image may be included in the metadata of the first clip data. When the thumbnail image is selected, the first external electronic apparatus may request the raw data of the first clip data from the electronic apparatus 401, based on the address information in which the raw data of the first clip data is stored in the electronic apparatus 401, included in the metadata of the first clip data. When receiving the raw data of the first clip data from the electronic apparatus, the first external electronic apparatus may perform an operation of pasting the raw data of the first clip data.

According to various embodiments, the memory 430 may be configured substantially the same as or similar to the memory 130 of FIG. 1.

According to various embodiments, the display 460 may be configured substantially the same as or similar to the display module 160 of FIG. 1.

According to an embodiment, the processor 420 may detect a movement of a designated gesture on the display 460 through at least one sensor (e.g., at least one of a touch sensor, a pressure sensor, or a motion sensor) included in a touch panel (or touchscreen) (not shown) seated on a panel of the display 460.

According to an embodiment, the display 460 may display various screens, for example, a lock screen, a home screen, an application execution screen, or a keypad screen, according to use of the electronic apparatus 401 under control of the processor 420. The display 460 may include a liquid crystal display (LCD), an organic light-emitting diode (OLED), an active matrix organic light-emitting diode (AMOLED), or a flexible display. The touch panel may be a composite touch panel including a hand touch panel which detects a hand gesture and a pen touch panel (e.g., a digitizer) which detects a gesture of the stylus pen 201.

According to an embodiment, the display 460 may display the second input area including the first input area in the first state of waiting for input of writing data.

According to an embodiment, in the second state in which writing data is input, the display 460 may display handwriting data input using the stylus pen 201 (e.g., the stylus pen 201 of FIG. 2) in the second input area, and may display text data into which the handwriting data is converted as preview data in the first input area.

According to an embodiment, the display 460 may cancel display of the second input area in the third state in which input of the handwriting data is terminated, and may display the text data, which is the preview data, as input data in the first input area.

According to various embodiments, the communication module 490 may be configured substantially the same as or similar to the communication module 190 of FIG. 1, and may include a plurality of communication circuits using different communication technologies.

According to an embodiment, the communication module 490 may include at least one of a wireless LAN module (not shown) and a short-range communication module (not shown), and the short-range communication module (not shown) may include an ultra-wideband (UWB) communication module (not shown), a Wi-Fi communication module, an NFC communication module, a Bluetooth legacy communication module, and/or a BLE communication module.

According to an embodiment, the communication module 490 may receive state information, input information, and/or position-related information about the stylus pen 201 from the stylus pen 201 through communication with the stylus pen 201. For example, the communication module 490 may receive direction information (e.g., motion sensor data) about the stylus pen 201 obtained via the trigger circuit 298 or the sensor 299 of the stylus pen 201, voice information input via a microphone (not shown) of the stylus pen 201, or information about a remaining level of the battery 289 of the stylus pen 201. For example, the communication module 490 may receive sensing data obtained from the sensor 299 of the stylus pen 201 and/or information related to the position of the stylus pen 201 identified based on the sensing data. For example, the communication module 490 may receive information about a state of the button 337 included in the stylus pen 201.

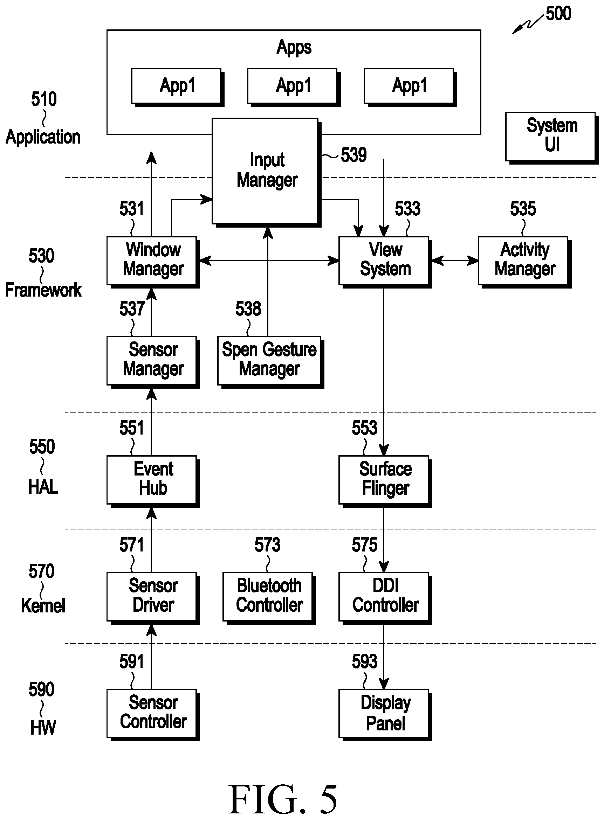

FIG. 5 is a diagram 500 illustrating a software module configuration of an electronic apparatus according to various embodiments.

Referring to FIG. 5, a platform included in a memory (e.g., the memory 130 of FIG. 1 or the memory 430 of FIG. 4) of the electronic apparatus (e.g., the electronic apparatus 101 of FIG. 1 or the electronic apparatus 401 of FIG. 4) may include an application layer 510, a framework layer 530, a library layer 550, a kernel layer 570, and a hardware layer 590.

The application layer 510 may include at least one application and a system UI. The application layer 510 may draw at least one layer based on a resolution of a display area of a display. According to an embodiment, the application may draw at least one layer based on the resolution of the display area of the display by using a drawing library (e.g., a view). According to an embodiment, the application may include a phone application, an Internet browser, a video application, or a game application, without being limited in type. According to an embodiment, the system UI may refer to an application configuring a plurality of graphical user interface (GUI) screens configured on a system of an electronic apparatus, such as a notification bar or a quick view.

The framework layer 530 may include a window manager 531, a view system 533, an activity manager 535, a sensor manager 537, a stylus pen gesture manager 538, and/or an input manager 539. According to an embodiment, the framework layer 530 may provide various functions to the application so that a function or information provided from one or more resources of the electronic apparatus may be used by the application. The window manager 531 may manage one or more GUI resources used for a screen of the electronic apparatus. For example, when a change in state of the electronic apparatus is identified through a sensor module (e.g., the sensor module 176 of FIG. 1), the window manager 531 may transmit information about the display area corresponding to a changed state of the electronic apparatus to the application. For example, when the change in the state of the electronic apparatus is identified, the information about the display area corresponding to the changed state of the electronic apparatus may be transmitted to an application for which continuity is configured among applications being executed.

The view system 533 may be a module for drawing at least one layer, based on the resolution of the display area of the display. In an embodiment, the application may draw at least one layer based on the resolution of the display area of the display by using the view system 533. The activity manager 535 may manage a life cycle of the application and an activity stack. The sensor manager 537 may include a module capable of controlling a sensor, based on application usability. The stylus pen gesture manager 538 may include a module capable of controlling gesture information received from a stylus pen (e.g., the stylus pen 201 of FIG. 2 or 3). The input manager 539 may recognize handwriting data input through the stylus pen in a second input area, may convert the handwriting data into text data, and may manage the converted text data to be displayed in the second input area. The input manager 539 may manage a clipboard in the electronic apparatus.

The library layer 550 is a hardware abstraction layer (HAL), may refer to an abstracted layer between a plurality of hardware modules included in the hardware layer 590 and software of the electronic apparatus, and may include an event hub 551 and a surface flinger 553. The event hub 551 may refer to an interface module which standardizes an event generated in a touch module and a sensor module. The surface flinger 553 may synthesize a plurality of layers. In an embodiment, the surface flinger 553 may provide data indicating a plurality of synthesized layers to a display controller.

The kernel layer 570 may include various drivers for controlling various hardware modules included in the electronic apparatus, and may include a sensor driver 571 including an interface module for controlling a sensor controller connected to the sensor, a Bluetooth controller 573, and the display controller (DDI controller) 575. The sensor driver 571 may include a sensor control interface module. The Bluetooth controller 573 may control Bluetooth communication. The display controller (DDI controller) 575 may correspond to a display driving circuit. In an embodiment, the display controller (DDI controller) 575 may be configured in hardware or software.

The hardware layer 590 may identify a state change of the electronic apparatus, based on the sensor module, and may include a display panel 593 capable of displaying content, based on control of the sensor controller 591 controlling the sensor module and the DDI controller 575. According to an embodiment, the display panel 593 may refer to a display device.

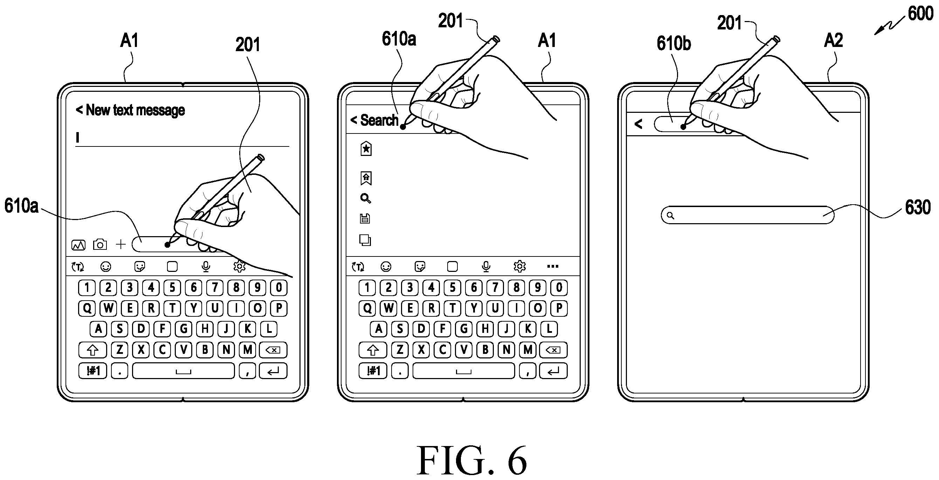

FIG. 6 is a diagram 600 illustrating a first input area included in a first application in an electronic apparatus according to various embodiments.

Referring to FIG. 6, when executing a message application Al, the electronic apparatus (e.g., the electronic apparatus 101 of FIG. 1 and FIG. 2 or the electronic apparatus 401 of FIG. 4) may identify a text input field area 610a included in the message application A1 A as a first input area. When receiving a first event indicating a hovering input or a touch input from a stylus pen 201 (e.g., the stylus pen 201 of FIG. 2 and FIG. 3) in a second input area including the text input field area 610a, the electronic apparatus may switch to a first state of waiting for a handwriting input.

When executing an Internet application A2, the electronic apparatus (e.g., the electronic apparatus 101 of FIG. 1 and FIG. 2 or the electronic apparatus 401 of FIG. 4) may identify a text input field area 610b included in the Internet application A2 A and an input field area 630 in HTML as a first input area. When receiving a first event indicating a hovering input or a touch input from a stylus pen 201 (e.g., the stylus pen 201 of FIG. 2 and FIG. 3) in a second input area including the text input field area 610b, the electronic apparatus may switch to a first state of waiting for a handwriting input.

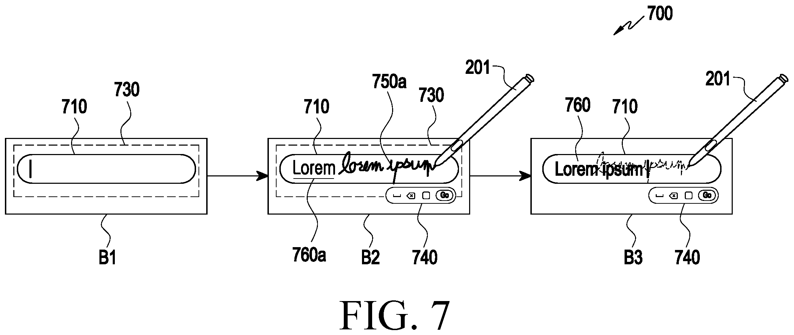

FIG. 7 is a diagram 700 illustrating a state switch operation according to input of handwriting data in an electronic apparatus according to various embodiments.

Referring to FIG. 7, the electronic apparatus (e.g., the electronic apparatus 101 of FIG. 1 and FIG. 2 or the electronic apparatus 401 of FIG. 4) may display, as an area for inputting handwriting data, a second input area 730 including a certain area of a first input area 710 for displaying text data through an input with a keypad in a first state B 1 as a state of waiting for input of handwriting data. When receiving a second event indicating input of handwriting data with a stylus pen 201 (e.g., the stylus pen 201 of FIG. 2 and FIG. 3) in the second input area in the first state B 1, the electronic apparatus may switch to a second state B2.

While displaying handwriting data 750a input using the stylus pen 201 in the second input area 730 in the second state B2, the electronic apparatus may convert the handwriting data 750a into text data, and may display the converted text data 760a as preview data in the first input area 710. The electronic apparatus may display a toolbar 740 including functions available via the stylus pen 201 at a position adjacent to the second input area 730. When detecting termination of the input of the handwriting data with the stylus pen 201 in the second state B2, the electronic apparatus may switch to a third state B3 indicating the termination of the input of the handwriting data. When receiving a third event of receiving no input signal from the stylus pen 201 for a certain time in the second state B2, receiving a third event indicating a touch input from the stylus pen 201 in an area other than the second input area 730 within a certain time after the input of the handwriting data in the second input area 730 is canceled, or receiving a third event indicating a touch input from a first object (e.g., a hand) in the second input area 730, the electronic apparatus may detect the termination of the input of the handwriting data, and may switch to the third state B3.

In the third state B3, the electronic apparatus may determine the text data 760a displayed as the preview data in the second state B2 as input data, and may display the text data 760 determined as the input data in the first input area 710. The electronic apparatus may cancel display of the second input area, and may delete display of the handwriting data.

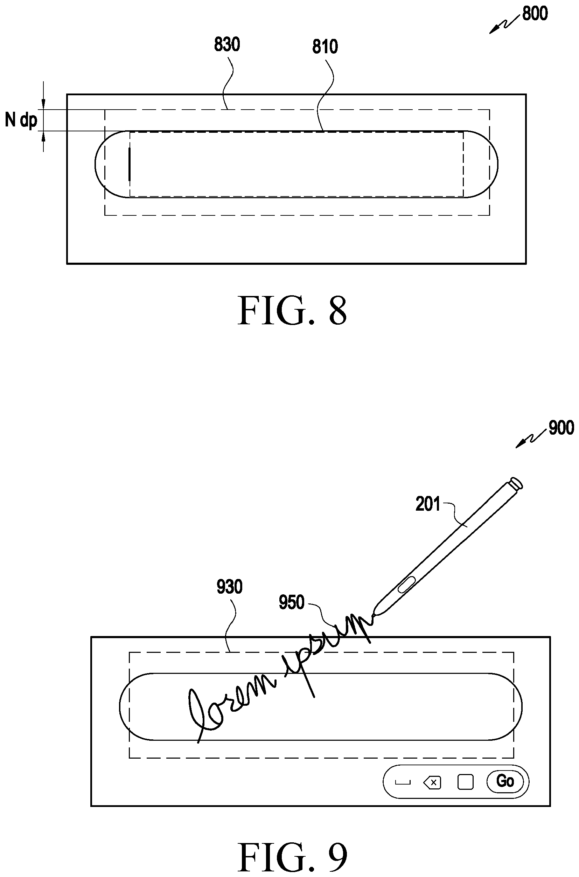

FIG. 8 is a diagram 800 illustrating a switch to a first state in which an electronic apparatus may wait for input of handwriting data according to various embodiments.

Referring to FIG. 8, when executing a first application and detecting detachment of a stylus pen 201 (e.g., the stylus pen 201 of FIG. 2 and FIG. 3) inserted into the electronic apparatus (e.g., the electronic apparatus 101 of FIG. 1 and FIG. 2 or the electronic apparatus 401 of FIG. 4), the electronic apparatus 401 may configure an input area obtained by extending a first input area 810 provided by the first application by a certain area (e.g., N dp) as a second input area 830. When receiving a first event indicating a hovering input or a touch input from the stylus pen 201 in the second input area 830, the electronic apparatus may switch to the first state in which the second input area for inputting handwriting data with the stylus pen 201 is displayed. The electronic apparatus may wait for input of handwriting data with the stylus pen 201 in the first state.

FIG. 9 is a diagram 900 illustrating an operation of inputting handwriting data in a second state of an electronic apparatus according to various embodiments.

Referring to FIG. 9, when input of handwriting data 950 is out of a second input area 930 while detecting input of handwriting data with a stylus pen 201 (e.g., the stylus pen 201 of FIG. 2 and FIG. 3) in the second input area 930 in a second state in which handwriting data is input, the electronic apparatus (e.g., the electronic apparatus 101 of FIG. 1 and FIG. 2 or the electronic apparatus 401 of FIG. 4) may recognize the handwriting data 950 which is out of the second input area 930 equally as the handwriting data detected in the second input area 930. The electronic apparatus may recognize the handwriting data 950 which is out of the second input area 930 as the handwriting data detected in the second input area 930.

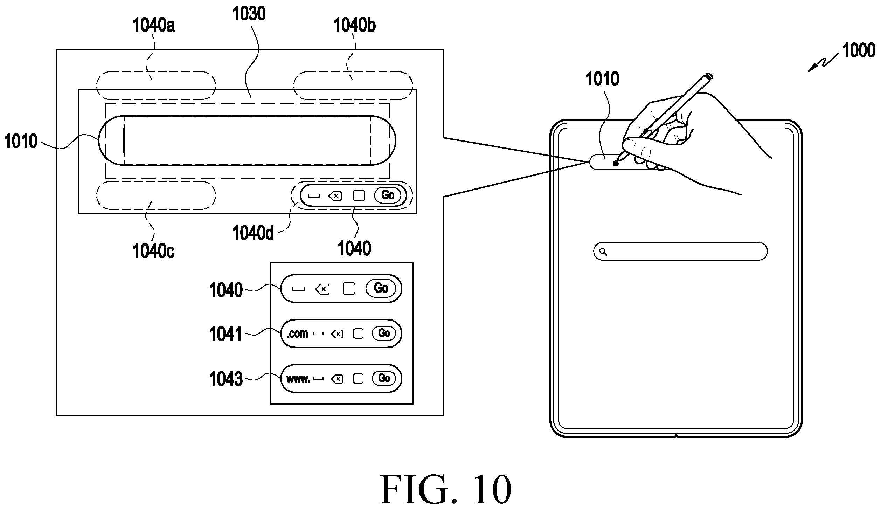

FIG. 10 is a diagram 1000 illustrating an operation of inputting handwriting data in a second state of an electronic apparatus according to various embodiments.

Referring to FIG. 10, the electronic apparatus (e.g., the electronic apparatus 101 of FIG. 1 and FIG. 2 or the electronic apparatus 401 of FIG. 4) may provide a toolbar 1040 available via a stylus pen 201 (e.g., the stylus pen 201 of FIG. 2 and FIG. 3) near a second input area 1030 including a first input area 1010 in a second state in which handwriting data is input or in a state in which input of handwriting data is terminated.

The electronic apparatus may automatically or manually provide the toolbar 1040 at various positions 1040a, 1040b, 1040c, and 1040d adjacent to the second input area 1030. For example, when the second input area 1030 is positioned in an upper area of a display (e.g., the display 460 of FIG. 4), the electronic apparatus may display the toolbar 1040 in a position (e.g., 1040c or 1040d) under the second input area 1030. For example, when the second input area 1030 is positioned in a lower area of the display 460 (e.g., the display 460 of FIG. 4), the electronic apparatus may display the toolbar 1040 in a position (e.g., 1040a or 1040b) above the second input area 1030. For example, when a left-handed mode is configured, the electronic apparatus may display the toolbar 1040 in a left position (e.g., 1040a or 1040c) of the second input area 1030. For example, when a right-handed mode is configured, the electronic apparatus may display the toolbar 1040 in a right position (e.g., 1040b or 1040 d) of the second input area 1030.

The electronic apparatus may provide the toolbar 1040 which basically includes a space function, a backspace function, and/or a keypad switch function.

The electronic apparatus may provide a toolbar for adding a required function according to the first input area included in a first application being executed, and may provide, for example, a toolbar 1041 including an input key for inputting ".com" as an additional function or a toolbar 1043 including an input key for inputting "www." as an additional function.

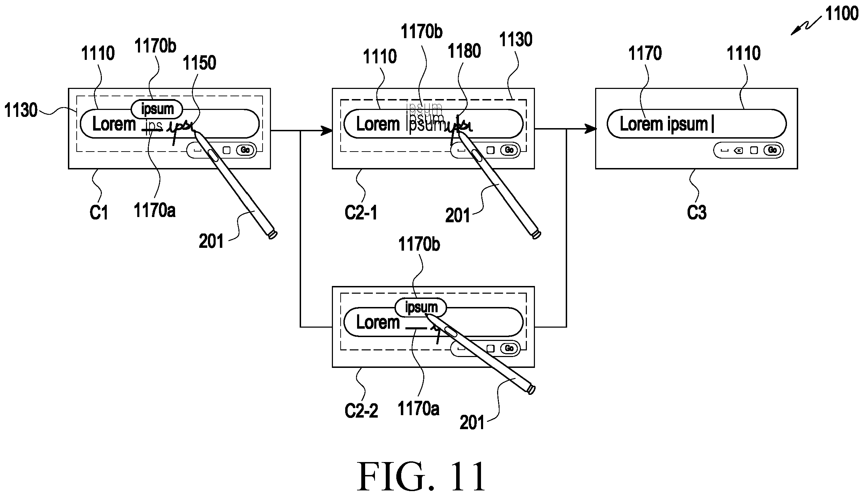

FIG. 11 is a diagram 1100 illustrating use of recommended data in a second state of an electronic apparatus according to various embodiments.

Referring to FIG. 11, while displaying handwriting data 1150 input with a stylus pen 201 (e.g., the stylus pen 201 of FIG. 2 and FIG. 3) in a second input area 1130 and displaying text data 1170a into which the handwriting data 1150 is converted as preview data in a first input area 1110 in a second state C1 in which handwriting data is input, the electronic apparatus (e.g., the electronic apparatus 101 of FIG. 1 and FIG. 2 or the electronic apparatus 401 of FIG. 4) may display recommended text data 1170b at a position adjacent to the handwriting data 1150. The electronic apparatus may determine a letter to be input next, based on the handwriting data being input with the stylus pen 201 in the second input area 1130, and may provide the recommended text data 1170b including the determined letter. The electronic apparatus may display text data ("Lorem") determined as input data and the text data ("ips") displayed as preview data to be distinguished from each other in the first input area 1110.

When detecting an up-to-down gesture 1180 with the stylus pen 201 on the handwriting data 1150 as a gesture of selecting the recommended text data 1170b with the stylus pen 201 in the second state C2-1, the electronic apparatus may determine the recommended text data 1170b as input data.

When detecting a touch input on the recommended data 1170b with the stylus pen 201 as a gesture of selecting the recommended text data 1170b with the stylus pen 201 in the second state C2-2, the electronic apparatus may determine the recommended text data 1170b as input data.

The electronic apparatus may display the recommended data 1170b as input data 1170 in the first input area 1110 in a third state C3. The electronic apparatus may cancel display of the second input area 1130, the handwriting data 1150, and the text data 1170a displayed as the preview data in the third state C3.

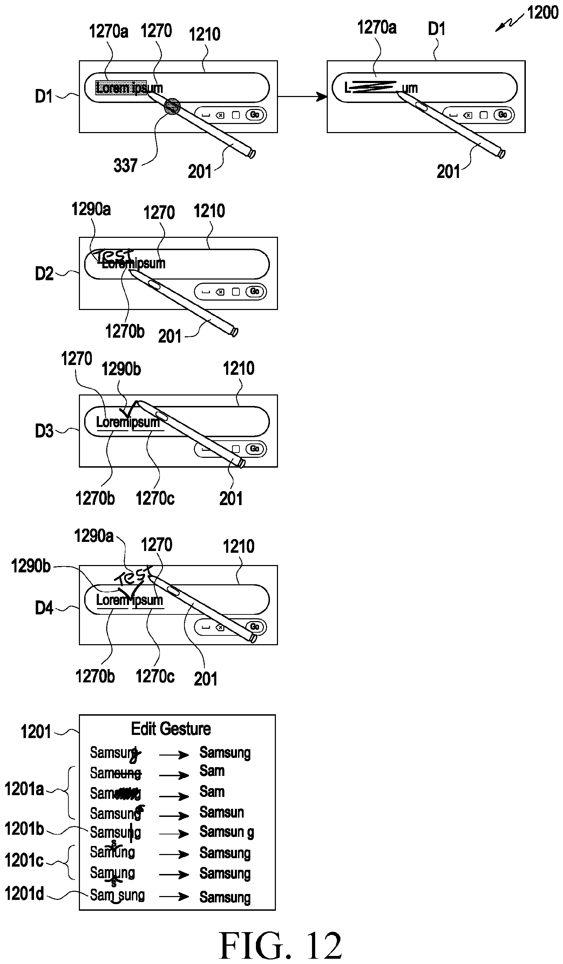

FIG. 12 is a diagram 1200 illustrating an operation of editing input data in a third state of an electronic apparatus according to various embodiments.

Referring to FIG. 12, while displaying text data 1270 as input data in a first input area 1210 is in a third state D1 indicating termination of input of handwriting data, the electronic apparatus (e.g., the electronic apparatus 101 of FIG. 1 and FIG. 2 or the electronic apparatus 401 of FIG. 4) may detect selection of some letters 1270a ("Lorem ips") corresponding to a left start point of a gesture to a right end point of the gesture among letters included in the text data 1270 using the gesture of moving a stylus pen 201 (e.g., the stylus pen 201 of FIG. 2 and FIG. 3) from left to right in a state of a button 337 provided on the stylus pen 201 being input. When detecting a deletion gesture of repeatedly performing a gesture of moving the stylus pen 201 left to right and right to left on some selected letters 1270a in a state in which input of the button 337 provided on the stylus pen 201 is canceled, the electronic apparatus may delete some letters 1270a ("Lorem ips").

When detecting a correction gesture using the stylus pen 201 which is superimposing a new second letter 1290a ("Test") as handwriting data on a first letter 1270b ("Lorem") among the letters included in the text data 1270 displayed in the first input area 1210 in the third state D2, the electronic apparatus may convert the new second letter 1290a ("Test") input as the handwriting data into text data, may delete the first letter1270b ("Lorem"), and may display the new second letter 1290a ("Test") converted into the text data at the position of the deleted first letter.

When detecting a space insertion gesture using the stylus pen 201 which is inputting a "V" shape 1290b or an arrow shape indicating a downward direction between the first letter 1270b ("Lorem") and a third letter 1270c ("ipsum") among the letters included in the text data 1270 displayed in the first input area 1210 in a third state D3, the electronic apparatus may insert a space between the first letter 1270b ("Lorem") and the third letter 1270c ("ipsum").

The electronic apparatus may detect an additional gesture using the stylus pen 201 which is inputting a "V" shape 1290b between the first letter 1270b ("Lorem") and the third letter 1270c ("ipsum") among the letters included in the text data 1270 displayed in the first input area 1210 and inputting the new second letter 1290a ("Test") as handwriting data in the "V" shape 1290b in a third state D4. The electronic apparatus may convert the new second letter 1290a ("Test") input as the handwriting data into text data, and may add and display the new second letter 1290a ("Test") converted into the text data between the first letter 1270b ("Lorem") and the third letter 1270c ("ipsum").

In the third state, as in 1201a, the electronic apparatus may correct a letter ("f") to be corrected among letters ("Samsunf") included in text data displayed in the first input area by inputting a new letter ("g") as handwriting data onto the letter ("f") with the stylus pen 201 on a screen 1201.

In the third state, as in 1201b, the electronic apparatus may delete a letter ("sung" or "g") to be deleted among letters ("Samsung") included in text data displayed in the first input area by performing a gesture of deleting the letter ("sung" or "g") with the stylus pen 201 on the screen 1201.

In the third state, as in 1201c, the electronic apparatus may perform a gesture of a "V" or "A" shape between a first letter ("Sam") and a third letter ("ung") among letters ("Samsung") included in text data displayed in the first input area and then input a new second letter 1290a ("s") as handwriting data into the "V" or "A" shape on the screen 1201 by using the stylus pen, thereby inserting the new second letter 1290a ("s") between the first letter ("Sam") and the third letter ("ung").

In the third state, as in 1201d, when detecting a combining gesture with the stylus pen 201 in a presence of a space between a first letter ("Sam") and a third letter ("sung") among letters ("Samsung") included in text data displayed in the first input area, the electronic apparatus may remove the space between the first letter ("Sam") and the third letter ("sung"), and may display the first letter ("Sam") and the third letter ("sung") to be combined on the screen 1201.

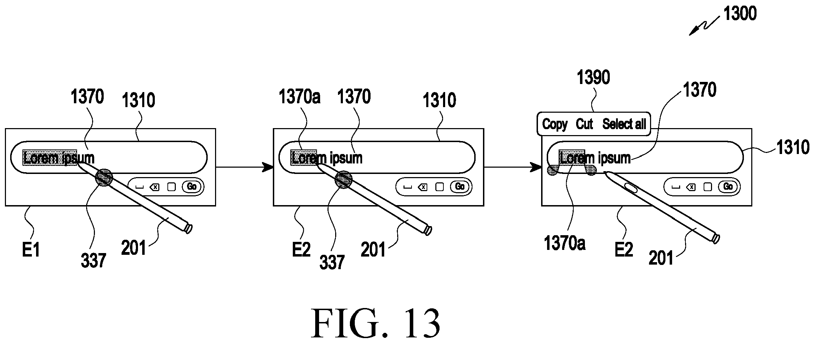

FIG. 13 is a diagram 1300 illustrating an operation of editing input data in a third state of an electronic apparatus according to various embodiments.

Referring to FIG. 13, while displaying text data 1370 as input data in a first input area 1310 is in a third state E1 indicating termination of input of handwriting data, the electronic apparatus (e.g., the electronic apparatus 101 of FIG. 1 and FIG. 2 or the electronic apparatus 401 of FIG. 4) may detect selection of some letters 1370a ("Lore") among letters included in the text data 1370, based on a gesture of moving a stylus pen 201 (e.g., the stylus pen 201 of FIG. 2 and FIG. 3) from left to right or right to left in a state of a button 337 provided on the stylus pen 201 being input. When detecting cancellation of a touch input after the selection of some letters 1370a ("Lore") with the stylus pen 201, the electronic apparatus may provide a relevant option menu 1390 (e.g., Copy, Cut, or Select All) for editing some selected letters 1370a ("Lore") in a third state E2.

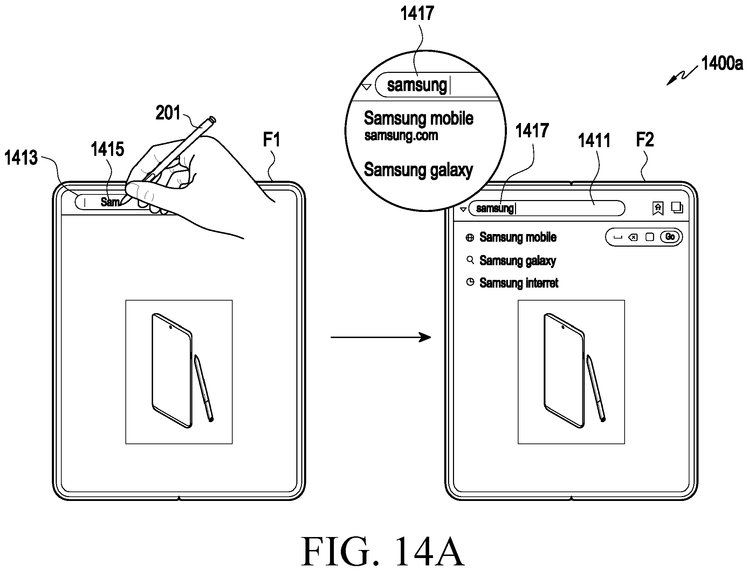

FIG. 14A to FIG. 14C are diagrams 1400a to 1400c illustrating processing of handwriting data input through a stylus pen in an electronic apparatus according to various embodiments.

Referring to FIG. 14A, when detecting input of handwriting data 1415 with a stylus pen 201 (e.g., the stylus pen 201 of FIG. 2 and FIG. 3) in a second input area 1413 including a first input area 1411 provided by an Internet application while executing the Internet application in a second state F1, the electronic apparatus (e.g., the electronic apparatus 101 of FIG. 1 and FIG. 2 or the electronic apparatus 401 of FIG. 4) may convert the handwriting data 1415 into text data 1417, and may display the text data 1417 in the first input area 1411 in a third state F2.

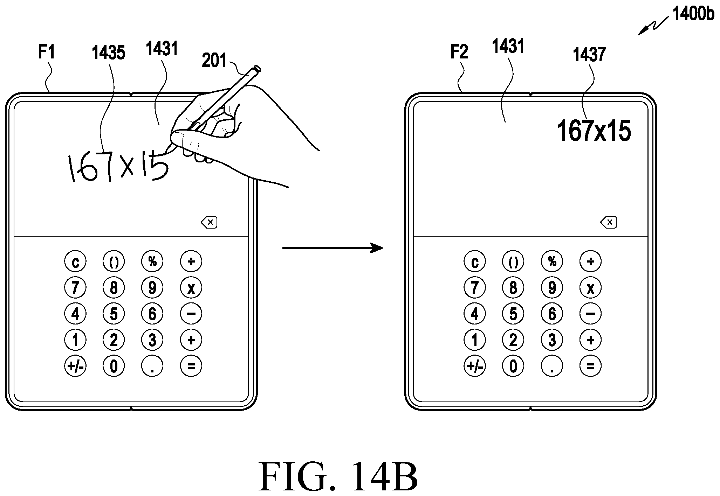

Referring to FIG. 14B, when detecting input of handwriting data 1435 with the stylus pen 201 (e.g., the stylus pen 201 of FIG. 2 and FIG. 3) in a first input area 1431 provided by a calculator application while executing the calculator application in the second state F1, the electronic apparatus (e.g., the electronic apparatus 101 of FIG. 1 and FIG. 2 or the electronic apparatus 401 of FIG. 4) may convert the handwriting data 1435 into text data 1437, and may display the text data 1437 in the first input area 1431 in the third state F2.

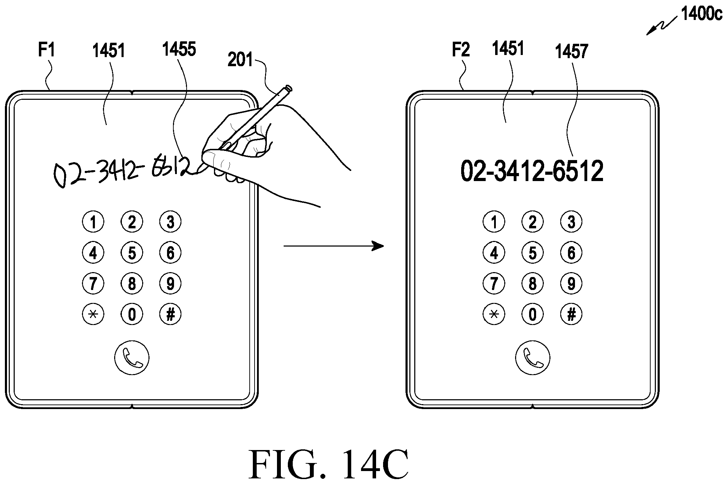

Referring to FIG. 14C, when detecting input of handwriting data 1455 with the stylus pen 201 (e.g., the stylus pen 201 of FIG. 2 and FIG. 3) in a first input area 1451 provided by a call application while executing the call application in the second state F1, the electronic apparatus (e.g., the electronic apparatus 101 of FIG. 1 and FIG. 2 or the electronic apparatus 401 of FIG. 4) may convert the handwriting data 1455 into text data 1457 and may display the text data 1457 in the first input area 1451 in the third state F2.

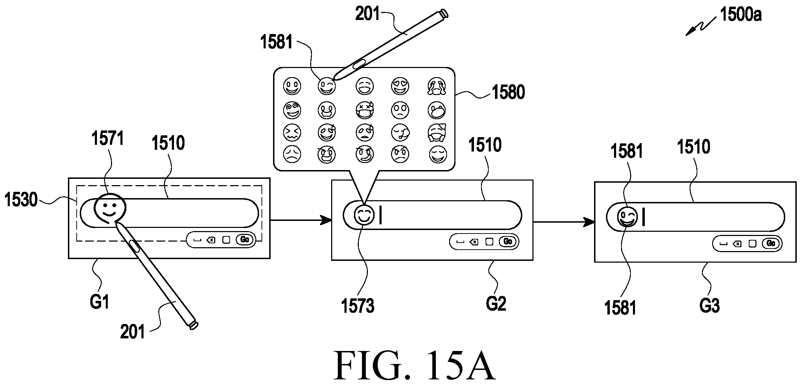

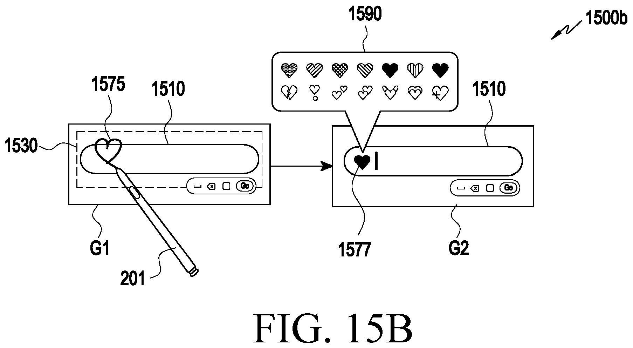

FIG. 15A and FIG. 15B are diagrams 1500a and 1500b illustrating processing of emoji data input through a stylus pen in an electronic apparatus according to various embodiments.

Referring to FIG. 15A, when detecting handwriting data input with a stylus pen 201 (e.g., the stylus pen 201 of FIG. 2 and FIG. 3) in a second input area 1530 including a first input area 1510 as emoji data 1571 in a second state G1, the electronic apparatus (e.g., the electronic apparatus 101 of FIG. 1 and FIG. 2 or the electronic apparatus 401 of FIG. 4) may detect first emoji data 1573 corresponding to the emoji data 1571 drawn by the handwriting data among a plurality of pieces of emoji data stored in the electronic apparatus, and may display the first emoji data 1573 in the first input area 1510 in a third state G2. While displaying the first emoji data 1573 in the first input area 1510, the electronic apparatus may display an input window 1580 including a plurality of pieces of emoji data near the first emoji data 1573. When detecting selection of second emoji data 1581 with the stylus pen 201 from the input window 1580, the electronic apparatus may display the second emoji data 1581 in the first input area 1510 instead of the first emoji data 1573 in the third state G3.

Referring to FIG. 15B, when detecting handwriting data input with the stylus pen 201 (e.g., the stylus pen 201 of FIG. 2 and FIG. 3) in the second input area 1530 including the first input area 1510 as emoji data 1575 in the second state G1, the electronic apparatus (e.g., the electronic apparatus 101 of FIG. 1 and FIG. 2 or the electronic apparatus 401 of FIG. 4) may detect first emoji data 1577 corresponding to the emoji data 1575 drawn by the handwriting data among the plurality of pieces of emoji data stored in the electronic apparatus, and may display the first emoji data 1577 in the first input area 1510 in the third state G2. While displaying the first emoji data 1577 in the first input area 1510, the electronic apparatus may display an input window 1590 including a plurality of pieces of emoji data near the first emoji data 1577. When detecting selection of emoji data with the stylus pen 201 from the input window 1590, the electronic apparatus may display the emoji data selected from the input window 1590 in the first input area 1510 instead of the first emoji data 1577 or may additionally display the selected emoji data in the first input area 1510 displaying the first emoji data 1577 in the third state.

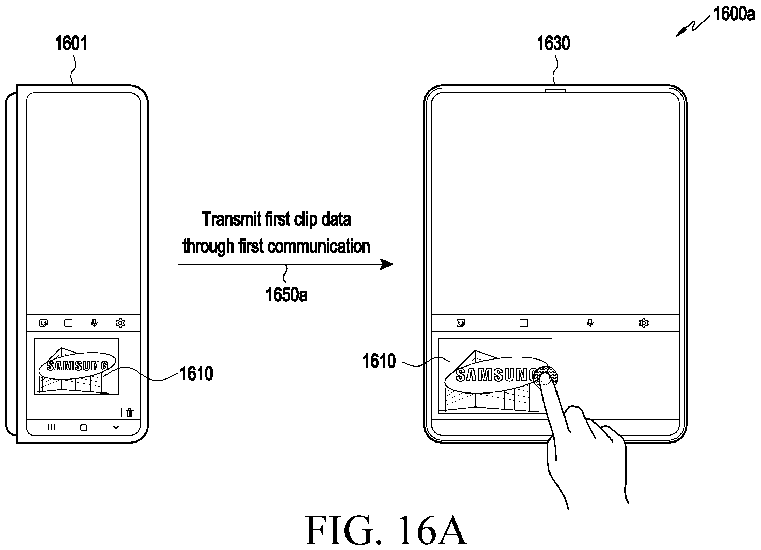

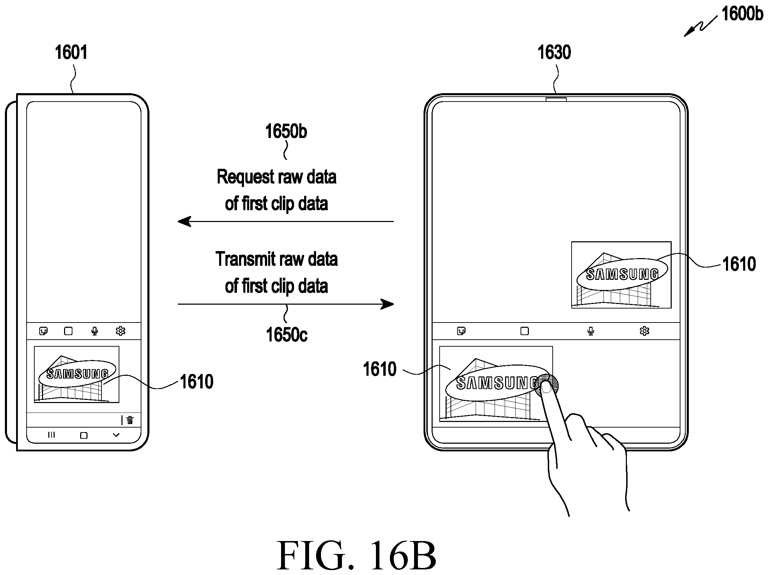

FIG. 16A and FIG. 16B are diagrams 1600a and 1600b illustrating an operation of sharing data in a clipboard in an electronic apparatus according to various embodiments.

Referring to FIG. 16A, when identifying at least one piece of first clip data 1610 shared by a user among a plurality of pieces of clip data stored in an area corresponding to a clipboard of a memory (e.g., the memory 430 of FIG. 4) and determining a first external electronic apparatus 1630 which logs in with the same user account among at least one external electronic apparatus detected based on a first communication module (e.g., a BLE communication module) included in a communication module (e.g., the communication module 490 of FIG. 4), the electronic apparatus (e.g., the electronic apparatus 101 of FIG. 1 and FIG. 2 or the electronic apparatus 401 of FIG. 4) may transmit the first clip data 1610 to the first external electronic apparatus 1630 by using the first communication module (e.g., the BLE communication module) (1650a).

When the first clip data 1610 is identified as image data having a data size equal to or greater than a predetermined value, the electronic apparatus may transmit the first clip data 1610 including only metadata including address information in which raw data of the first clip data 1610 is stored in the electronic apparatus 1601 without the raw data to the first external electronic apparatus 1630 through the first communication module, based on a second transmission method (e.g., a delayed transfer method).

The first external electronic apparatus 1630 may display the first clip data received from the electronic apparatus 1601 when displaying data stored in the clipboard through selection of a menu present on a keypad while executing a first application. Since the first clip data 1610 is transmitted by the second transmission method (e.g., the delayed transfer method), the first external electronic apparatus 1630 may display the first clip data 1610 as thumbnail data included in the metadata of the first clip data 1610 when displaying the first clip data 1610 stored in the clipboard.

When the first clip data 1610 is selected by a user of the first external electronic apparatus 1630, the first external electronic apparatus 1630 may request the raw data of the first clip data 1610 from the electronic apparatus 1601,

based on the address information stored in the metadata of the first clip data 1610 through the first communication module (e.g., the BLE communication module) or a second communication module (e.g., a Wi-Fi communication module) included in the communication module (1650b).

When receiving a request for the raw data of the first clip data 1610 from the first external electronic apparatus 1630, the electronic apparatus 1601 may transmit the raw data of the first clip data 1610 to the first external electronic apparatus 1630 through the second communication module (e.g., the Wi-Fi communication module) (1650c).

When receiving the raw data of the first clip data 1610 from the electronic apparatus 1601, the first external electronic apparatus 1630 may perform a paste function of displaying the first clip data 1610 in a first input area provided by the first application.

According to various embodiments, an electronic apparatus (e.g., the electronic apparatus 401) may include a display (e.g., the display 460) and a processor (e.g., the processor 420), wherein the processor may be configured to convert handwriting data being input into text data when input of the handwriting data with a stylus pen (e.g., 201) is detected in a second input area including a first input area in a first state of waiting for input of handwriting data and switch to a second state in which the converted text data is displayed as preview data in the first input area while displaying the handwriting data being input in the second input area, and to determine the text data displayed as the preview data as input data and switch to a third state in which the converted text data is displayed in the first input area when termination of the input of the handwriting data is detected.

According to various embodiments, the processor may be configured to execute a first application, identify the first input area provided by the first application, configure an area obtained by extending the first input area by a certain area as the second input area, and switch to the first state of displaying the second input area and waiting for the input of the handwriting data when an event indicating a hovering input or a touch input is received from the stylus pen.

According to various embodiments, when the handwriting data being input in the second area is out of the second input area in the second state, the processor may be configured to recognize the handwriting data which is out of the second input area as handwriting data input in the second input area.

According to various embodiments, the processor may be configured to provide a toolbar including functions available via the stylus pen at a position adjacent to the second input area.

According to various embodiments, the processor may be configured to display the text data converted in letters as the preview data in the first input area in the second state.

According to various embodiments, the processor may be configured to determine recommended text data, based on the handwriting data being input in the second input area, and display the recommended text data at a position adjacent to the handwriting data displayed in the second input area in the second state, and to determine the recommended text data as the input data and switch to the third state in which the recommended text data is displayed in the first input area when detecting a selection gesture for the recommended text data using the stylus pen.

According to various embodiments, the processor may be configured to display text data in letters as the recommended text data, based on the handwriting data in the second state.

According to various embodiments, when an input from the stylus pen is not detected for a certain time in the second state, when a touch input from the stylus pen is detected in an area other than the second input area, or when a touch input from a first object is detected in the second input area, the processor may be configured to detect termination of the input of the handwriting data and switch to the third state.

According to various embodiments, the processor may be configured to cancel display of the second input area in the third state.

According to various embodiments, when detecting an editing gesture for the text data displayed in the first input area using the stylus pen in the third state, the processor may be configured to perform an editing function for the text data, based on a type of the detected editing gesture.

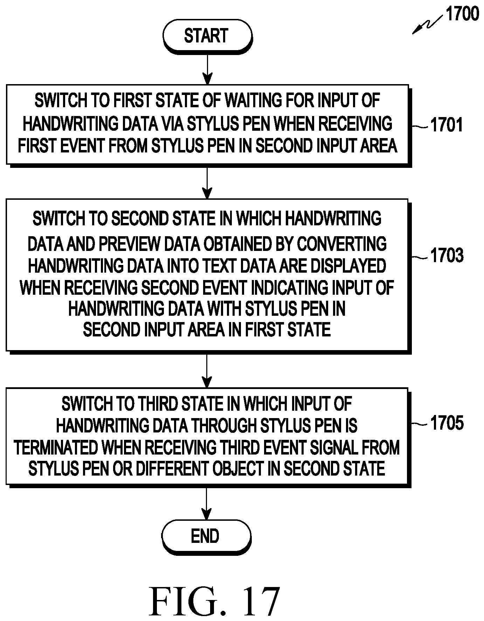

FIG. 17 is a flowchart 1700 illustrating an operation of processing an input from a stylus pen in an electronic apparatus according to various embodiments. The operation of processing the input from the stylus pen may include operation 1701 to operation 1705, and may be construed as being performed by a processor (e.g., the processor 120 of FIG. 1 or the processor 420 of FIG. 4) of the electronic apparatus (e.g., the electronic apparatus of FIG. 1 and FIG. 2 or the electronic apparatus 401 of FIG. 4). According to an embodiment, at least one of operation 1701 to operation 1705 may be omitted, some operations may be performed in a different order, or another operation may be added.

In operation 1701, when receiving a first event from the stylus pen 201 (e.g., the stylus pen 201 of FIG. 2 and FIG. 3) in a second input area, the electronic apparatus (e.g., the electronic apparatus of FIG. 1 and FIG. 2 or the electronic apparatus 401 of FIG. 4) may switch to a first state of waiting for input of handwriting data via the stylus pen.

According to an embodiment, when executing a first application providing a first input area and detecting detachment of the stylus pen inserted into the electronic apparatus, the electronic apparatus may configure an input area obtained by extending the first input area by a certain area (e.g., a certain pixel) as a second input area. When receiving a first event indicating a hovering input or a touch input from the stylus pen in the second input area, the electronic apparatus may switch to a first state in which the second input area for inputting handwriting data with the stylus pen is displayed.

In operation 1703, when receiving a second event indicating input of handwriting data with the stylus pen 201 (e.g., the stylus pen 201 of FIG. 2 and FIG. 3) in the second input area in the first state, the electronic apparatus (e.g., the electronic apparatus of FIG. 1 and FIG. 2 or the electronic apparatus 401 of FIG. 4) may switch to a second state in which the handwriting data and preview data obtained by converting the handwriting data into text data are displayed.

According to an embodiment, when detecting the input of the handwriting data with the stylus pen in the second input area in the second state, the electronic apparatus may convert the handwriting data being input into the text data, and may display the converted text data as the preview data in the first input area while displaying the handwriting data being input in the second input area.

According to an embodiment, when the handwriting data is out of the second input area while detecting the input of the handwriting data with the stylus pen in the second input area in the second state, the electronic apparatus may recognize the handwriting data which is out of the second input area as handwriting data in the second input area.

According to an embodiment, in the second state, the electronic apparatus may provide a toolbar including functions available via the stylus pen at a position adjacent to the second input area.

According to an embodiment, in the second state, the electronic apparatus may identify recommended text data, based on the handwriting data being input through the stylus pen in the second input area, and may display the recommended text data at a position adjacent to the handwriting data displayed in the second input area. The electronic apparatus may determine a letter to be input next, based on the handwriting data being input in the second input area, and may display text data including the determined letter as recommended text data. The electronic apparatus may determine the letter to be input next, based on at least one of a probability value of a letter already input in the handwriting data, a context already input in the handwriting data, or a situation in which the handwriting data is input (e.g., the type of the first application being executed or the type of the first input area (e.g., a number field or an HTML field)), and may display the text data including the determined letter as recommended text data.

In operation 1705, when receiving a third event from the stylus pen 201 (e.g., the stylus pen 201 of FIG. 2 and FIG. 3) or a different object in the second state, the electronic apparatus (e.g., the electronic apparatus 101 of FIG. 1 and FIG. 2 or the electronic apparatus 401 of FIG. 4) may switch to a third state in which the input of the handwriting data through the stylus pen is terminated.

According to an embodiment, when receiving a third event of receiving no input signal from the stylus pen for a certain time, receiving a third event indicating a touch input from the stylus pen in an area other than the second input area within a certain time after the input of the handwriting data in the second input area is canceled, or receiving a third event indicating a touch input from a first object (e.g., a hand) in the second input area in the second state, the electronic apparatus may detect termination of the input of the handwriting data, and may switch to the third state.

According to an embodiment, when detecting the termination of the input of the handwriting data in the second state and switching to the third state, the electronic apparatus may determine, as input data, the text data displayed as the preview data in the second state, and may display the text data in the first input area.

According to an embodiment, when detecting a selection gesture for the recommended text data using the stylus pen while displaying the recommended text data, based on the handwriting data being input through the stylus pen in the second input area in the second state, the electronic apparatus may determine the recommended data as input data, may switch to the third state, and may display the recommended data as the input data in the first input area.

According to an embodiment, when detecting an editing gesture for the text data displayed in the first input area using the stylus pen in the third state, the processor 420 may perform an editing function (e.g., correction, deletion, addition, spacing, or combining) for the text data, based on the type of the detected editing gesture.

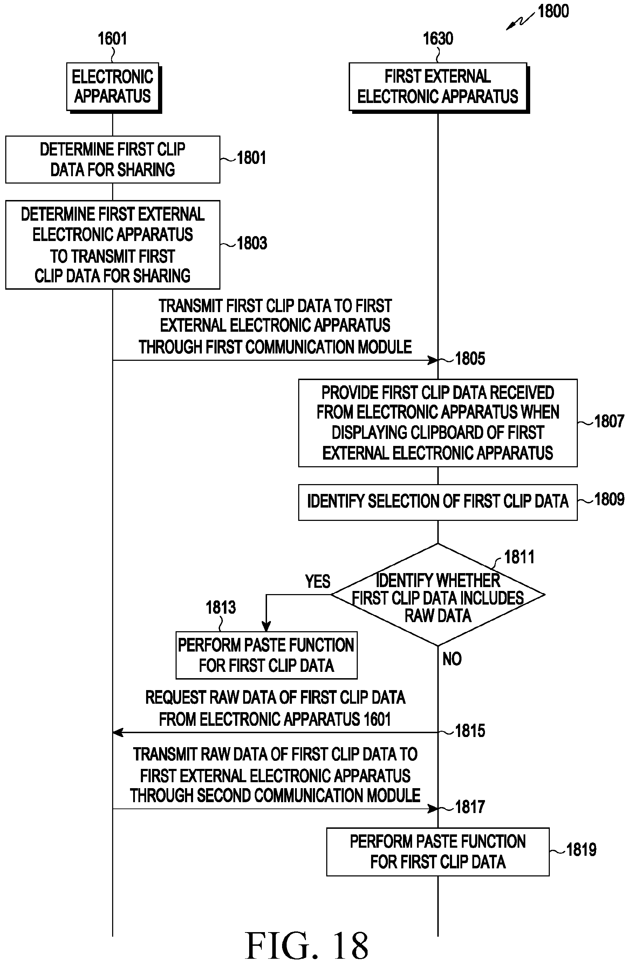

FIG. 18 is a flowchart 1800 illustrating an operation of sharing data in a clipboard in an electronic apparatus according to various embodiments. The operation of processing the input from the stylus pen may include operation 1801 to operation 1819, and may be construed as being performed by a processor (e.g., the processor 120 of FIG. 1 or the processor 420 of FIG. 4) of the electronic apparatus (e.g., the electronic apparatus 101 of FIG. 1 and FIG. 2 or the electronic apparatus 401 of FIG. 4). According to an embodiment, at least one of operation 1801 to operation 1819 may be omitted, some operations may be performed in a different order, or another operation may be added.

In operation 1801, the electronic apparatus 1601 (e.g., the electronic apparatus 101 of FIG. 1 and FIG. 2 or the electronic apparatus 401 of FIG. 4) may determine first clip data for sharing.

According to an embodiment, the electronic apparatus may determine at least one first clip data selected by a user for sharing among a plurality of pieces of clip data stored in an area corresponding to the clipboard in a memory 430. For example, the plurality of pieces of clip data stored in the clipboard may include text data copied from the Internet, image data copied from the Internet, text data copied from a message, and/or image data shared from an SNS.

In operation 1803, the electronic apparatus 1601 (e.g., the electronic apparatus 101 of FIG. 1 and FIG. 2 or the electronic apparatus 401 of FIG. 4) may determine a first external electronic apparatus 1630 to transmit the first clip data for sharing.

According to an embodiment, the electronic apparatus may detect at least one external electronic apparatus, based on a first communication module (e.g., a BLE communication module) included in a communication module (e.g., the communication module 490 of FIG. 4), and may determine the first external electronic apparatus 1630 which logs in with the same user account among the detected at least one external electronic apparatus.

In operation 1805, the electronic apparatus 1601 (e.g., the electronic apparatus 101 of FIG. 1 and FIG. 2 or the electronic apparatus 401 of FIG. 4) may transmit the first clip data to the first external electronic apparatus 1630 through the first communication module.

According to an embodiment, when the first clip data has a data size less than or equal to a predetermined value, the electronic apparatus may transmit the first clip data (e.g., text data) including raw data to the first external electronic apparatus through the first communication module, based on a first transmission method (e.g., a real-time transfer method).

According to an embodiment, when the first clip data has a data size equal to or greater than the predetermined value, the electronic apparatus may transmit the first clip data (e.g., image data) including only metadata without the raw data to the first external electronic apparatus through the first communication module, based on a second transmission method (e.g., a delayed transfer method). Since original address information about the first clip data included in the metadata of the first clip data, the electronic apparatus may change the original address information to address information in which the raw data of the first clip data is stored in the electronic apparatus, and may transmit the first clip data including only the changed metadata to the first external electronic apparatus.

In operation 1807, the first external electronic apparatus 1630 (e.g., the electronic apparatus 102 of FIG. 1) may provide the first clip data received from the electronic apparatus 1601 when displaying a clipboard of the first external electronic apparatus.

According to an embodiment, when executing a first application including a first input area and displaying clip data stored in the clipboard of the first external electronic apparatus through selection a menu present on a keypad, the first external electronic apparatus 1630 may display the clip data including the first clip data received from the electronic apparatus 1601.

According to an embodiment, in a case of the first clip data (e.g., the text data) including the raw data, the first external electronic apparatus 1630 may display the raw data as the first clip data.

According to an embodiment, in a case of the first clip data (e.g., the image data) including no raw data, the first external electronic apparatus 1630 may display a thumbnail image included in the metadata of the first clip data as the first clip data.

In operation 1809, the first external electronic apparatus 1630 (e.g., the electronic apparatus 102 of FIG. 1) may identify selection of the first clip data.

According to an embodiment, the first external electronic apparatus may identify the selection of the first clip data by the user while displaying the first clip data stored in the clipboard of the first external electronic apparatus.

In operation 1811, the first external electronic apparatus 1630 (e.g., the electronic apparatus 102 of FIG. 1) may identify whether the raw data is included in the first clip data.

According to an embodiment, the first external electronic apparatus 1630 may identify whether the raw data is included in the first clip data selected by the user.

When the first external electronic apparatus 1630 identifies that raw data is included in the first clip data in operation 1811, the first external electronic apparatus 1630 (e.g., the electronic apparatus 102 of FIG. 1) may perform a paste function for the first clip data in operation 1813. According to an embodiment, the first external electronic apparatus 1630 may perform the paste function of displaying the raw data (e.g., the text data) of the first clip data in the first input area.

When the first external electronic apparatus 1630 identifies that the raw data is not included in the first clip data in operation 1811, the first external electronic apparatus 1630 (e.g., the electronic apparatus 102 of FIG. 1) may request the raw data of the first clip data from the electronic apparatus 1601 in operation 1815. According to an embodiment, the first external electronic apparatus 1630 may request the raw data of the first clip data from the electronic apparatus 1601, based on the address information about the electronic apparatus included in the metadata of the first clip data.

In operation 1817, the electronic apparatus 1601 (e.g., the electronic apparatus of FIG. 1 and FIG. 2 or the electronic apparatus 401 of FIG. 4) may transmit the raw data of the first clip data to the first external electronic apparatus 1630 through a second communication module (e.g., a Wi-Fi communication module).

In operation 1819, the first external electronic apparatus 1630 (e.g., the electronic apparatus 102 of FIG. 1) may perform the paste function for the first clip data. According to an embodiment, the first external electronic apparatus 1630 may perform the paste function of displaying the raw data (e.g., the image data) of the first clip data transmitted from the electronic apparatus 1601 in the first input area.

According to various embodiments, a method for processing an input from a stylus pen in an electronic apparatus may include converting handwriting data being input into text data when input of the handwriting data with a stylus pen is detected in a second input area including a first input area in a first state of waiting for input of handwriting data, switching to a second state in which the converted text data is displayed as preview data in the first input area while displaying the handwriting data being input in the second input area, and determining the text data displayed as the preview data as input data and switching to a third state in which the converted text data is displayed in the first input area when termination of the input of the handwriting data is detected.

According to various embodiments, the method may further include executing a first application, identifying the first input area provided by the first application, configuring an area obtained by extending the first input area by a certain area as the second input area, and switching to the first state of displaying the second input area and waiting for the input of the handwriting data when an event indicating a hovering input or a touch input is received from the stylus pen.

According to various embodiments, the method may further include recognizing the handwriting data which is out of the second input area as handwriting data input in the second input area when the handwriting data being input in the second area is out of the second input area in the second state.

According to various embodiments, the method may further include providing a toolbar including functions available via the stylus pen at a position adjacent to the second input area.

According to various embodiments, the method may further include displaying the text data converted in letters as the preview data in the first input area in the second state.

According to various embodiments, the method may further include determining recommended text data, based on the handwriting data being input in the second input area and displaying the recommended text data at a position adjacent to the handwriting data displayed in the second input area in the second state, and determining the recommended text data as the input data and switching to the third state in which the recommended text data is displayed in the first input area when detecting a selection gesture for the recommended text data using the stylus pen.

According to various embodiments, the method may further include displaying text data in letters as the recommended text data, based on the handwriting data in the second state.

According to various embodiments, the method may further include detecting termination of the input of the handwriting data and switching to the third state when an input from the stylus pen is not detected for a certain time in the second state, when a touch input from the stylus pen is detected in an area other than the second input area, or when a touch input from a first object is detected in the second input area.

According to various embodiments, the method may further include canceling display of the second input area in the third state.

According to various embodiments, the method may further include detecting an editing gesture for the text data displayed in the first input area using the stylus pen in the third state, and performing an editing function for the text data, based on a type of the detected editing gesture.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic apparatus comprising:
a display; and
a processor,
wherein the processor is configured to:
convert handwriting data being input into text data in case that input of the handwriting data with a stylus pen is detected in a second input area comprising a first input area in a first state of waiting for input of handwriting data and switch to a second state in which the converted text data is displayed as preview data in the first input area while displaying the handwriting data being input in the second input area; and
determine the text data displayed as the preview data as input data and switch to a third state in which the converted text data is displayed in the first input area in case that termination of the input of the handwriting data is detected.

2. The electronic apparatus of claim 1, wherein the processor is configured to execute a first application, identify the first input area provided by the first application, configure an area obtained by extending the first input area by a certain area as the second input area, and switch to the first state of displaying the second input area and waiting for the input of the handwriting data in case that an event indicating a hovering input or a touch input is received from the stylus pen.

3. The electronic apparatus of claim 1, wherein, in case that the handwriting data being input in the second area is out of the second input area in the second state, the processor is configured to recognize the handwriting data which is out of the second input area as handwriting data input in the second input area.

4. The electronic apparatus of claim 1, wherein the processor is configured to provide a toolbar comprising functions available via the stylus pen at a position adjacent to the second input area.

5. The electronic apparatus of claim 1, wherein the processor is configured to display the text data converted in letters as the preview data in the first input area in the second state.

6. The electronic apparatus of claim 1, wherein the processor is configured to:
determine recommended text data, based on the handwriting data being input in the second input area, and display text data in letters as the recommended text data, based on the handwriting data, at a position adjacent to the handwriting data displayed in the second input area in the second state; and
determine the recommended text data as the input data and switch to the third state in which the recommended text data is displayed in the first input area in case of detecting a selection gesture for the recommended text data using the stylus pen.

7. The electronic apparatus of claim 1, wherein, in case that an input from the stylus pen is not detected for a certain time in the second state, in case that a touch input from the stylus pen is detected in an area other than the second input area, or in case that a touch input from a first object is detected in the second input area, the processor is configured to detect termination of the input of the handwriting data and switch to the third state.

8. The electronic apparatus of claim 1, wherein, in case of detecting an editing gesture for the text data displayed in the first input area using the stylus pen in the third state, the processor is configured to perform an editing function for the text data, based on a type of the detected editing gesture.

9. A method for processing an input from a stylus pen in an electronic apparatus, the method comprising:
converting handwriting data being input into text data in case that input of the handwriting data with a stylus pen is detected in a second input area comprising a first input area in a first state of waiting for input of handwriting data;
switching to a second state in which the converted text data is displayed as preview data in the first input area while displaying the handwriting data being input in the second input area; and
determining the text data displayed as the preview data as input data and switching to a third state in which the converted text data is displayed in the first input area in case that termination of the input of the handwriting data is detected.

10. The method of claim 9, further comprising:
executing a first application;
identifying the first input area provided by the first application;
configuring an area obtained by extending the first input area by a certain area as the second input area; and
switching to the first state of displaying the second input area and waiting for the input of the handwriting data in case that an event indicating a hovering input or a touch input is received from the stylus pen.

11. The method of claim 9, further comprising recognizing the handwriting data which is out of the second input area as handwriting data input in the second input area in case that the handwriting data being input in the second area is out of the second input area in the second state.

12. The method of claim 9, further comprising providing a toolbar comprising functions available via the stylus pen at a position adjacent to the second input area.

13. The method of claim 9, further comprising:
determining recommended text data, based on the handwriting data being input in the second input area, and displaying text data in letters as the recommended text data, based on the handwriting data, at a position adjacent to the handwriting data displayed in the second input area in the second state; and
determining the recommended text data as the input data and switching to the third state in which the recommended text data is displayed in the first input area in case of detecting a selection gesture for the recommended text data using the stylus pen.

14. The method of claim 9, further comprising detecting termination of the input of the handwriting data and switching to the third state in case that an input from the stylus pen is not detected for a certain time in the second state, in case that a touch input from the stylus pen is detected in an area other than the second input area, or in case that a touch input from a first object is detected in the second input area.

15. The method of claim 9, further comprising:
detecting an editing gesture for the text data displayed in the first input area using the stylus pen in the third state; and
performing an editing function for the text data, based on a type of the detected editing gesture.
